# EUROPÄISCHE PATENTSCHRIFT

(11) **EP 1 886 751 B1**
(45) Veröffentlichungstag und Bekanntmachung des Hinweises auf die Patenterteilung: **07.10.2009**
(21) Anmeldenummer: 07015177.4
(22) Anmeldetag: 02.08.2007
(51) Int. Cl.: B23B 31/16, B23Q 1/00, B23Q 11/08

(54) **Schnellspanneinheit, Verschlusseinheit hierfür und Schnellspannsystem**
Quick acting clamping device, closing unit and system for quick clamping
Unité de serrage rapide, unité de fermeture correspondante et système de serrage rapide

(30) Priorität: 08.08.2006 DE 102006037708
(43) Veröffentlichungstag der Anmeldung: 13.02.2008
(73) Patentinhaber: Schunk GmbH & Co. KG Spann- und Greiftechnik, 74348 Lauffen am Neckar (DE)
(72) Erfinder: Kurz, Friedrich, 74226 Nordheim (DE); Gross, Johann, 74081 Heilbronn (DE)
(74) Vertreter: Dreiss

(56) Entgegenhaltungen:
- DE-A1- 10 317 336
- DE-U1-202004 009 283

## Beschreibung

Die Erfindung betrifft eine Schnellspanneinheit mit einer von einem Grundkörper gebildeten Spannaufnahme, mit wenigstens einem gegenüber dem Grundkörper zwischen einer Entriegelungsstellung und einer Verriegelungsstellung beweglich angeordneten Spannelement, mit einem Zylinder und einem im Zylinder angeordneten, mit dem Zylinder wenigstens einen Druckraum begrenzenden Kolbenelement, wobei bei einer Druckbeaufschlagung des Druckraums mit einem Druckmittel das Spannelement in die Verriegelungslage oder die Entriegelungslage bewegt wird. Die Erfindung betrifft auch eine Verschlusseinheit zum Verschließen der Spannaufnahme einer Schnellspanneinheit sowie ein Schnellspannsystem, umfassend eine Schnellspanneinheit und eine Verschlusseinheit.

Eingangs genannte Schnellspanneinheiten sind aus dem Stand der Technik beispielsweise aus der DE 103 17 336 A1 oder der DE 20 2004 009 283 U1 vorbekannt. Bei diesen Schnellspanneinheiten ist das Kolbenelement in einem Zylinder axial beweglich angeordnet, wobei bei Druckbeaufschlagung des Druckraums das Kolbenelement die Spannelemente in die Entriegelungs- bzw. Verriegelungslage bewegt. Die Spannelemente können dabei beispielsweise als Kugeln, als Stifte oder auch als Schieber ausgebildet sein.

Der vorliegenden Erfindung liegt die Aufgabe zugrunde, eine Schnellspanneinheit vorzuschlagen, die einen vorteilhaften Aufbau aufweist und funktionssicher arbeitet.

Hierzu wird eine Schnellspanneinheit gemäß Anspruch 1 vorgeschlagen, Folglich ist vorgesehen, dass das Kolbenelement als gegenüber dem Grundkörper feststehendes Kolbenelement und der Zylinder als gegenüber dem Grundkörper und dem Kolbenelement bewegliches Zylinderelement ausgebildet ist. Gemäß der Erfindung wird also bei Druckbeaufschlagung des Druckraums mit einem fluidischen Druckmittel, wie insbesondere Druckluft oder Hydraulikflüssigkeit, nicht das Kolbenelement, sondern das Zylinderelement bewegt. Aufgrund des Vorsehens eines feststehenden Kolbenelements können am Kolbenelement Baugruppen oder Einheiten angeordnet und befestigt werden. Der Druckraum kann insbesondere um das Kolbenelement ringartig verlaufend ausgebildet sein. Das Zylinderelement ist dabei auf dem Kolbenelement axial verschieblich angeordnet und ist zur radialen Bewegung wenigstens eines Spannelements mit dem Spannelement vorzugsweise direkt, insbesondere über Schrägführungen, bewegungsgekoppelt. Die Schrägführungen können dabei entsprechend einem Keilhakengetriebe ausgebildet sein; aus einer axialen Bewegung des Zylinderelements resultiert aufgrund der schrägen Anordnung der miteinander zusammenwirkenden Führungen eine radiale Bewegung des wenigstens einen, insbesondere als Spannschieber ausgebildeten, Spannelements.

Vorteilhafterweise ist das Kolbenelement als Hohlkolbenelement ausgebildet ist. Aufgrund der Verwendung eines Hohlkolbenelements wird innerhalb des Hohlkolbenelements Bauraum zur Anordnung von Baugruppen oder Einheiten zur Verfügung gestellt. Die Baugruppen oder Einheiten können unmittelbar an der Innenseite des Hohlkolbenelements befestig werden. Das Hohlkolbenelement ist dabei vorzugsweise wenigstes einseitig offen bzw. wenigstes von einer Seite aus zugänglich, um entsprechende Baugruppen oder Einheiten im Hohlkolbenelement unterbringen zu können.

Vorzugsweise erstreckt sich die Innenseite des als Hohlkolbenelement ausgebildeten Kolbenelements in axialer Verlängerung der Spannaufnahme zur abschnittsweisen Axialführung eines in die Spannaufnahme eingreifenden Spannbolzens. Das Kolbenelement, bzw. dessen Innseite, übernimmt dabei also eine Führungsfunktion beim Einführen des Spannbolzens in die Spannaufnahme.

Zur Begrenzung des Druckraums in axialer Richtung kann das Kolbenelement einen umlaufenden und in nach radial außen gewandeter Richtung abstehenden ringbundartigen Kolbenabschnitt aufweisen. Dieser Kolbenabschnitt liegt dabei vorteilhafterweise dichtend an der Innenwand des Zylinderelements an.

Um eine druckunabhängige Verriegelung der Spannelemente zu gewährleisten, kann erfindungsgemäß vorgesehen sein, dass wenigstens ein Federelement vorgesehen ist, das das Zylinderelement so beaufschlagt, dass die Spannelemente in der Verriegelungsstellung gehalten werden. Vorteilhafterweise können dabei mehrere Federelemente vorgesehen sein, die sich einerends am Kolbenabschnitt des Kolbenelements und andererends am Zylinderelement abstützen.

Zur Begrenzung des Druckraums auf der der Spannaufnahme abgewandten Seite kann das Zylinderelement ein das Kolbenelement ringartig umgebendes Deckelelement umfassen. Durch das Vorsehen eines solchen Deckelelements kann eine vorteilhafte Montage erzielt werden; das Zylinderelement kann ohne Deckelelement auf das Kolbenelement aufgeschoben werden, wobei dann der Druckraum durch das Deckelelement verschlossen wird.

Bei einer weiteren, besonders bevorzugten Ausführungsform der Erfindung weist der Grundkörper einen das Zylinderelement aufnehmenden, zur verschieblichen Lagerung des Zylinderelements druckbeaufschlagbaren Zylinderraum auf. Das Zylinderelement als solches, das im Zylinderraum bewegbar angeordnet ist, erhält dadurch die Funktion eines Kolbens. Vorteil einer derartigen Ausbildung ist, dass der Zylinderraum von einer Druckleitung leicht zugänglich ist, wodurch eine sichere Druckzuführung gewährleistet wird.

Die Druckbeaufschlagung des Druckraums kann dabei über eine in radialer Richtung verlaufende Öffnung am Zylinderelement erfolgen, welche unabhängig von der axialen Lage des Zylinderelements mit einer Druckzuführungsleitung korrespondiert. Dazu kann beispielsweise zwischen dem Zylinderelement und dem den Zylinderraum bildenden Grundkörper ein in die beiden axialen Richtungen begrenzter Druckzwischenraum vorhanden sein, in den eine grundkörperseitige Druckluftleitung mündet.

Der Zylinderraum und der Druckraum sind dabei vorzugsweise so ausgebildet, dass bei einer Druckbeaufschlagung des Zylinderraums das Spannelement seine Verriegelungslage und bei Druckbeaufschlagung des Druckraums, der ja zwischen dem Kolbenelement und dem Zylinderelement liegt, seine Entriegelungslage einnimmt.

Der Zylinderraum kann seinerseits auf der der Spannaufnahme abgewandten Seite mit einem dichtend am Kolbenelement anliegenden Verschlusselement verschlossen sein. Das Kolbenelement kann dabei insbesondere zwischen dem Grundkörper und dem Verschlusselement unter Vorspannung angeordnet sein. Ferner kann das Verschlusselement zumindest im Bereich der Mittellängsachse des Kolbenelements einen Durchbruch hin zum Innenraum des als Hohlkolbenelement ausgebildeten Kolbenelements aufweisen. Durch diesen Durchbruch kann beispielsweise eine entsprechende Baugruppe oder eine entsprechende Einheit in das Hohlkolbenelement eingeführt werden und/oder es können elektrische Leitungen durch diesen Durchbruch hindurchgeführt werden.

Auf der Innenseite des Hohlkolbenelements können Anschläge oder Befestigungsabschnitte für in dem Hohlkolbenelement anzuordnende Baugruppen oder Einheiten vorgesehen sein.

Hierdurch kann eine sichere und positionsgenaue Anordnung der Baugruppen oder Einheiten innerhalb des Hohlkolbenelements erreicht werden.

Die eingangs genannte Aufgabe wird auch, gemäß Anspruch 11 durch eine Verschlusseinheit zur Anordnung in eine Spannaufnahme und zum Verschließen der Spannaufnahme einer erfindungsgemäßen Schnellspanneinheit gelöst. Eine derartige Verschlusseinheit weist ein Druckelement auf, das aus einer Einführlage, in der es in die Spannaufnahme einführbar ist, in eine Verschlusslage bringbar ist. Ferner weist eine derartige Verschlusseinheit ein elastisches Dichtungselement auf, das in der Verschlusslage des Druckelements zum wenigstens weitgehend dichten Verschließen der Spannaufnahme vom Druckelement gegen den die Spannaufnahme umgebenden Bereich des Grundkörpers beaufschlagt wird. In der Einführlage ist der Durchmesser des Druckelements mit dem Dichtungselement kleiner als die Spannaufnahme, so dass ein Einführen des Druckelements samt Dichtungselement in die Spannaufnahme möglich ist. Aufgrund der Verlagerung des Druckelements in die Verschlusslage wird das elastische Dichtungselement insbesondere nach radial außen gegen den nach radial innen gewandten, die Spannaufnahme bildenden Teil des Grundkörpers beaufschlagt.

Zur Verlagerung des Druckelements aus der Einführlage in die Verschlusslage findet vorteilhafterweise ein Spannelement der Schnellspanneinheit Verwendung. Ein solches Spannelement wirkt dabei vorzugsweise mit dem Druckelement so zusammen, dass das Druckelement vom Spannelement in die Verschlusslage gebracht wird, wenn das Spannelement in seine Verriegelungsstellung bewegt wird. Hierzu können insbesondere am Druckelement oder am Spannelement Führungsschrägen vorgesehen sein, welche das Druckelement bei nach radial innen fahrendem Spannelement in die Verschlusslage überführen.

Das Druckelement kann dabei vorteilhafterweise ringartig ausgebildet sein und auf einen Trägerteil zwischen der Einführlage in die Verschlusslage axial bewegbar sein. Wie bereits angesprochen, können entsprechende Führungsschrägen vorgesehen sein, die bei einem nach radial innen fahrenden Spannelement das Verschlusselement in die entsprechende axiale Richtung bewegen.

Das Dichtungselement ist vorzugsweise als Dichtungsbalg ausgebildet, der einerseits am Druckelement und andererseits an einem ring- oder plattenartig ausgebildeten, nach radial außen überstehenden Rand des Trägerteils angeordnet ist. Der Durchmesser des Dichtungsbalgs ist dann, wenn das Druckelement in der Einführlage ist, kleiner als wenn das Druckelement axial in die Verschlusslage bewegt wird. Aufgrund des größer werdenden Durchmessers des Dichtungselements bei sich in die Verschlusslage bewegenden Druckelements kann ein Verschließen der Spannaufnahme erreicht werden.

Das Trägerteil als solches kann einen im Trägerteil vorhandenen, das Trägerteil durchgreifenden, axial unter Federvorspannung angeordneten Ventilkörper vorsehen, über den bei einem innerhalb der Verschlusseinheit auftretenden Überdruck Druckluft aus dem Trägerteil, insbesondere zum Entfernen von Spänen und Verschmutzungen im Bereich der Spannaufnahme, entweichen kann.

Der Ventilkörper kann dabei eine auf der Oberseite des Trägerteils aufliegende Ventilplatte und eine Ventilstange, die sich in axialer Richtung durch das Trägerteil erstreckt, umfassen. Im Querschnitt kann der Ventilkörper T-förmig ausgebildet sein. Neben einem Verschließen der Spannaufnahme durch die Verschlusseinheit kann durch Vorsehen eines derartigen Ventilkörpers ein Entfernen von Spänen und Verschmutzungen im Bereich der Spannaufnahme einer zugehörigen Spanneinheit erreicht werden.

Gemäß einer weiteren bevorzugten Ausführungsform der Erfindung ist ein Federelement vorgesehen, welches das Trägerteil bei Entnahme eines in die Spannaufnahme eingeführten Spannbolzens aus einer Ruhelage in eine Aktivierungslage in die Spannaufnahme beaufschlagt und/oder das Trägerteil in der Aktivierungslage hält. Befindet sich das Trägerteil in der Aktivierungslage und wird in dieser Aktivierungslage ein Spannbolzen in die Spannaufnahme eingeführt, so wird das Trägerteil vom Spannbolzen entgegen der Federbeaufschlagung in die Ruhelage bewegt. Die Ruhelage befindet sich dabei innerhalb der Spannaufnahme. Das Federelement kann sich dabei einerseits an der Schnellspanneinheit beziehungsweise deren Grundkörper oder deren Verschlusselement und andererseits am Trägerteil oder an einem zwischen dem Trägerteil und dem Federelement angeordneten Zwischenteil abstützen. Das Vorsehen eines solchen Federelements hat den Vorteil, dass bei einer Entnahme des Spannbolzens aus der Spannaufnahme eine Verlagerung des Trägerteils in die Aktivierungslage selbsttätig erfolgt. Wird beispielsweise das wenigstens eine Spannelement ebenfalls selbsttätig aufgrund des Vorsehens von entsprechenden Federelementen in die Verriegelungslage beaufschlagt, so kann hierdurch das Druckelement in die Verschlusslage gebracht werden, wodurch das Dichtungselement die Spannaufnahme wenigstens weitgehend dicht verschließt. Ein Eindringen von Spänen oder Verschmutzungen in die Spannaufnahme beziehungsweise in die Schnellspanneinheit wird hierdurch ausgeschlossen.

Zur geführten Bewegung des Trägerteils von der Ruhelage in die Aktivierungslage und von der Aktivierungslage in die Ruhelage kann ein Zwischenteil Verwendung finden, das teleskopartig ausgebildet ist und sich insbesondere an der Schnellspanneinheit, beziehungsweise an der Innenseite des Kolbenelements, abstützen kann. Das Zwischenteil kann dabei hülsenartig sein, wobei das Federelement, das das Zwischenteil in die Aktivierungslage beaufschlagt, innerhalb des Zwischenelements angeordnet sein und direkt auf das Trägerteil wirken kann. Die erfindungsgemäße Verschlusseinheit ist insbesondere dazu vorgesehen, in dem als Hohlkolbenelement ausgebildeten Kolbenelement einer erfindungsgemäßen Schnellspanneinheit untergebracht zu werden.

Die eingangs genannte Aufgabe wird auch durch ein Schnellspannsystem gelöst, das eine erfindungsgemäße Schnellspanneinheit und eine darin angeordnete erfindungsgemäße Verschlusseinheit umfasst.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
- Figur 1: eine erste erfindungsgemäße Spanneinheit in Explosionsdarstellung,
- Figur 2: einen Längsschnitt durch die Spanneinheit gemäß Figur 1,
- Figur 3: eine zweite erfindungsgemäße Schnellspanneinheit,
- Figur 4 - 6: verschiedene Betriebszustände der Spanneinheit gemäß Figur 1 und 2,
- Figur 7: eine perspektivische Darstellung einer erfindungsgemäßen Schlusseinheit,
- Figur 8 - 11: verschiedene Betriebszustände der Verschlusseinheit gemäß Figur 7,
- Figur 12 - 14: ein erfindungsgemäßes Spannsystem in verschiedenen Betriebszustände.

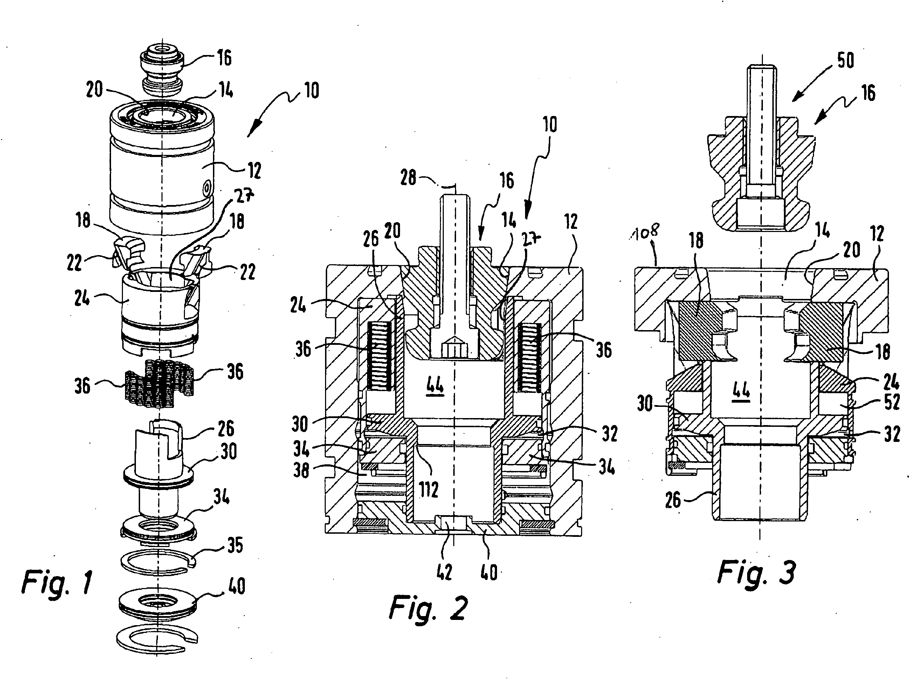

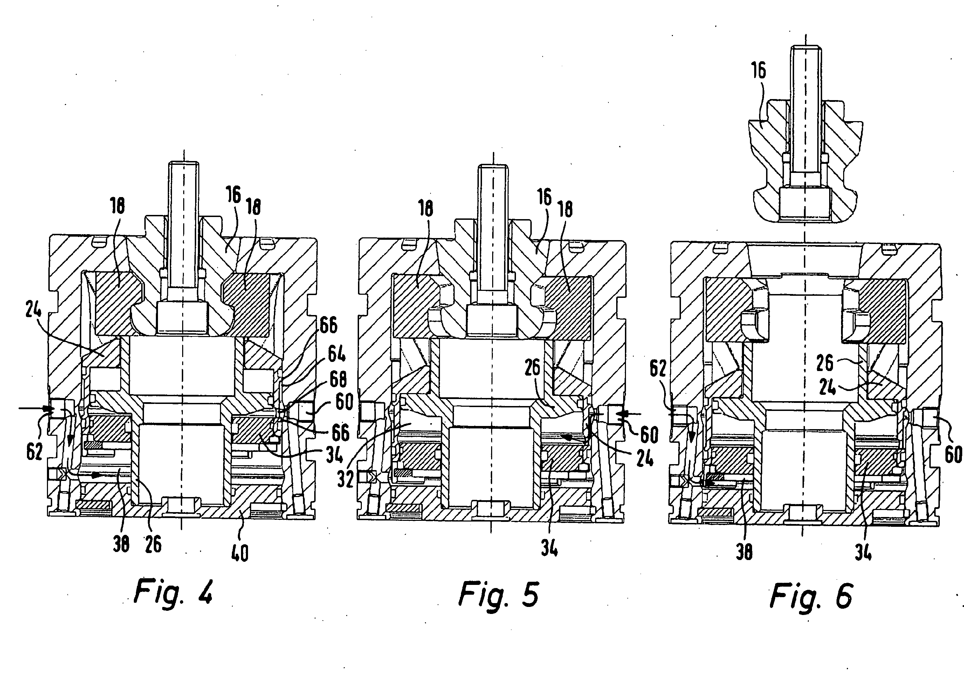

Die in den Figuren 1, 2, 4 - 6 dargestellte Schnellspanneinheit 10 umfasst einen Grundkörper 12, in dem eine Spannaufnahme 14 vorgesehen ist. In die Spannaufnahme 14 ist ein Spannbolzen 16 einführbar, der über zwei einander gegenüberliegende Spannelemente 18, die als Spannschieber ausgebildet sind, in der Schnellspanneinheit 10 verriegelbar ist. Die Figuren 2 und 4 zeigen dabei den Spannbolzen 16 in verriegelter, die Figuren 5 und 6 in entriegelter Stellung.

Um ein vereinfachtes Einführen des Spannbolzens 16 in die Spannaufnahme 14 zu ermöglichen und zudem ein konzentrisches Spannen des Spannbolzens 16 zu erreichen, ist der die Spannaufnahme 14 bildende Bereich 20 des Grundkörpers 12 leicht konisch ausgebildet.

Zur Verriegelung des Spannbolzens 16 sind die beiden Spannelemente 18 in radialer Richtung aufeinander zu in eine Verriegelungslage und voneinander weg in eine Entriegelungslage bewegbar. Hierzu sehen die Spannelemente 18 Schrägführungen 22 vor, die mit entsprechenden, an einem in axialer Richtung gegenüber dem Grundkörper 12 verlagerbaren Zylinderelement 24 vorgesehenen Schrägführungen zusammenwirken. Das Zylinderelement 24 ist dabei auf einem als Hohlkolbenelement 26 ausgebildeten Kolbenelement axial verschieblich angeordnet. Das Hohlkolbenelement 26, das konzentrisch um die Mittellängsachse 28 gegenüber dem Grundkörper 12 feststehend angeordnet ist, weist einen in nach radial außen gewandter Richtung abstehenden, ringbundartigen Kolbenabschnitt 30 auf. Zur Begrenzung eines mit einem Druckmittel, insbesondere mit Druckluft oder mit Hydraulikflüssigkeit, beaufschlagbaren Druckraums 32 zwischen dem Hohlkolbenelement 26 beziehungsweise dessen Kolbenabschnitt 30 und dem Zylinderelement 24 weist das Zylinderelement 24 ein das Hohlkolbenelement 26 ringartig umgebendes Deckelelement 34 auf. Das Deckelelement 34 wird über einen Spannring 35 am Zylinderelement 24 befestigt.

Aus Figur 2 wird ferner deutlich, dass die der Spannaufnahme 14 zugewandte Seite 27 des Hohlkolbenelements 26 sich in Verlängerung der Spannaufnahme 14 erstreckt und zur Axialführung des in die Spannaufnahme 14 eingreifenden Spannbolzens 16 dient. Das Hohlkolbenelement 26 sieht dabei an seinem oberen Rand Führungsschrägen als Einführhilfe für den,Spannbolzen 16 vor.

Wie insbesondere aus den Figuren 1 und 2 deutlich wird, sind zwischen dem Zylinderelement 24 und dem Kolbenabschnitt 30 des Hohlkolbenelements 26 mehrere koaxial um die Mittellängsachse 28 angeordnete Federelemente 36 vorgesehen, die das Zylinderelement 24 nach axial oben beaufschlagen. Das Zylinderelement 24 ist innerhalb eines grundkörperseitigen Zylinderraums 38 axial bewegbar angeordnet. Der Zylinderraum 38 ist auf seiner axial unteren Seite mit einem Verschlusselement 40 verschlossen, durch welches das Hohlkolbenelement 26 am Grundkörper 12 festgesetzt ist. Die eine Stirnseite des Hohlkolbenelements 26 wirkt dabei gegen den Grundkörper 12 und die andere Stirnseite des Hohlkolbenelements 26 gegen das Verschlusselement 40.

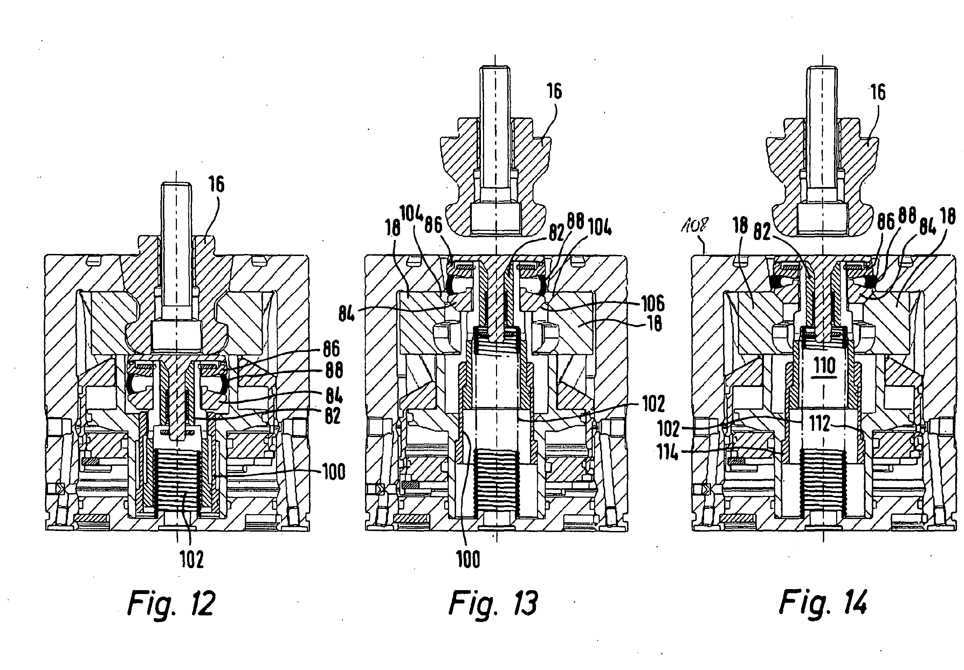

Das Verschlusselement 40 weist im Bereich der Mittellängsachse 28 einen Durchbruch 42 hin zum Innenraum 44 des Hohlkolbenelements 26 auf. Im Innenraum 44 kann, wie in den Figuren 12 - 14 dargestellt ist, beispielsweise eine Verschlusseinheit zum Verschließen der Spannaufnahme 14 vorgesehen sein. Ferner können andere Baugruppen oder Einheiten, beispielsweise eine Überwachungskamera oder Überwachungssensoren, im Innenraum 44 angeordnet werden.

Die in der Figur 3 dargestellte Schnellspanneinheit 50 entspricht im Wesentlichen der Schnellspanneinheit 10 gemäß Figur 1 und 2, wobei entsprechende Bauteile mit entsprechenden Bezugszeichen gekennzeichnet sind. Grundlegender Unterschied ist, dass der Grundkörper 12 keinen Zylinderraum 38 für das Zylinderelement 24 aufweist. Vielmehr ist auf der dem Druckraum 32 abgewandten Seite des Kolbenabschnitts 30 ein zweiter Druckraum 52 vorgesehen, der zur Bewegung des Zylinderelements 24 nach axial oben druckbeaufschlagbar ist. Zur Bewegung des Zylinderelements 24 nach axial unten ist der Druckraum 32 druckbeaufschlagbar. Das Hohlkolbenelement 26 kann dabei an den Grundkörper 12 angeflanscht sein.

Die Figuren 4 - 6 zeigen verschiedene Betriebszustände der Schnellspanneinheit 10 gemäß Figur 1 und 2. In der Figur 4 ist die Schnellspanneinheit 10 mit in der Spannaufnahme 14 verriegeltem Spannbolzen 16 dargestellt. Die Spannelemente 18 befinden sich dabei in ihrer radial innen liegenden Verriegelungsstellung. Auch ohne Druckbeaufschlagung des Zylinderraums 38 wird aufgrund der Federkraft der Federelemente 36 diese Verriegelungsstellung selbsttätig aufrechterhalten. Wird nun, wie in Figur 5 gezeigt, der Druckraum 32 über eine mit dem Druckraum 32 verbundene Druckleitung 60 druckbeaufschlagt, so bewegt sich das Zylinderelement 24 nach axial unten. Aufgrund der Schrägführungen 22 bewegen sich zeitgleich die Spannelemente 18 nach radial außen in ihre Entriegelungslage. Der Spannbolzen 16 wird dadurch freigegeben und kann, wie in Figur 6 dargestellt, aus der Spannaufnahme 14 entnommen werden.

Zur Verlagerung der Spannelemente 18 aus der Entriegelungslage in die Verriegelungslage wird der Druckraum 32 druckfrei geschaltet. Zur Unterstützung der durch die Federelemente 36 aufgebrachten Federkraft wird zudem über eine ebenfalls im Grundkörper 12 vorgesehene Druckleitung 62, wie in der Figur 4 und 6 dargestellt, der Zylinderraum 38 mit Druck beaufschlagt. Bei der Schnellspanneinheit 50 gemäß Figur 3 wird, wie bereits erwähnt, im Gegensatz hierzu, zur Bewegung des Zylinderelements nach axial oben der Druckraum 52 druckbeaufschlagt.

Zur Druckbeaufschlagung des Druckraums 32 bei beliebiger Stellung des Zylinderelements 24 auf dem Hohlkolbenelement 26 weist das Zylinderelement 24 einen auf seiner radial außen gelegenen Seite einen Druckzwischenraum 64 auf, der nach axial oben und axial unten von zwei umlaufenden Ringbünden 66 begrenzt wird. Der Druckzwischenraum 64 ist so angeordnet, dass in jeder Drucklage des Zylinderelements 24 dieser Druckzwischenraum 64 mit der Druckleitung 60 korrespondiert. Im Bereich des Druckzwischenraumes 64 ist ein Durchbruch 68 am Zylinderelement 24 vorgesehen, durch welchen das Druckmittel in den Druckraum 32 gelangt.

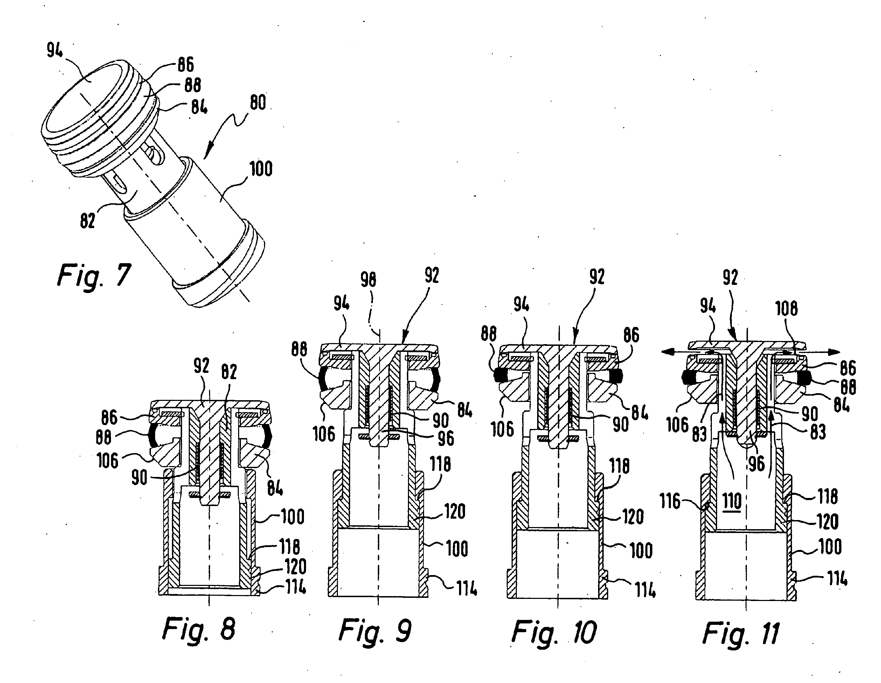

In den Figuren 7 - 11 ist eine Verschlusseinheit 80 zur Anordnung in den Innenraum 44 der Spanneinheit 10 gemäß den Figuren 1, 2 und 4 - 6 dargestellt. Die Verschlusseinheit 80 umfasst dabei ein auf einem Trägerteil 82 axial zwischen einer in den Figuren 8 und 9 dargestellten Einführlage und einer in den Figuren 10 und 11 dargestellten Verschlusslage bewegbares, ringartig ausgebildetes Druckelement 84. Zwischen dem Druckelement 84 und einem in radialer Richtung abstehenden Rand 86 des Trägerteils 82 ist ein balgartig ausgebildetes elastisches Dichtungselement 88 angeordnet. Das Trägerteil selbst kann dabei, wie in den Figuren gezeigt, mehrteilig ausgebildet sein.

In der Einführlage des Druckelements überragt das Dichtungselement 88 das Druckelement 84 beziehungsweise den Rand 86 in radial Richtung nicht oder nur unwesentlich. In der in den Figuren 10 und 11 dargestellten Verschlusslage des Druckelements wird das Dichtungselement 88 nach radial außen gedrückt und überragt in radialer Richtung das Druckelement 84 sowie den Rand 86.

Wie aus den Figuren 8 - 11 deutlich wird, ist im Trägerteil 82 ein das Trägerteil 82 durchgreifender, axial unter der Vorspannung einer Feder 90 angeordneter Ventilkörper 92 angeordnet. Der Ventilkörper 92 umfasst eine sich in radialer Richtung erstreckende Ventilplatte 94, die die Oberseite des Trägerteils 82 weitgehend vollständig abdeckt. Ferner umfasst der Ventilkörper 92 eine sich in axialer Richtung erstreckende Ventilstange 96, die im Bereich der Mittellängsachse 98 verläuft und das Trägerteil 82 in axialer Richtung durchgreift. Findet eine Druckerhöhung innerhalb des Trägerteils 82 statt, so hebt im in einer Spanneinheit eingebauten Zustand der Ventilkörper 92 von der Oberseite des Trägerteils 82 ab, wodurch Luft 83 aus dem Inneren des Trägerteils 82 zwischen der Ventilplatte 94 und der Oberseite des Trägerteils 82 in radialer Richtung, wie in Figur 11 angedeutet, ausströmen kann. Hierdurch kann ein Entfernen von Spänen und Verschmutzungen erzielt werden.

Das Trägerteil 82 samt Ventilkörper 92 und Druckelement 84 ist von einer Ruhelage, die in Figur 8 dargestellt ist, nach axial oben in eine in den Figuren 9 - 11 dargestellte Aktivierungslage überführbar. Zur gezielten Bewegungsführung ist hierfür ein teleskopartig ausgebildetes Zwischenteil 100 vorgesehen, das einerseits mit dem Trägerteil 82 und andererseits bei in die Spanneinheit 10 eingebautem Zustand mit dem Hohlkolbenelement 26, wie in den Figuren 12 - 14 dargestellt, zusammenwirkt.

In den Figuren 12 - 14 ist die in den Figuren 7 - 11 gezeigte Verschlusseinheit in die in den Figuren 1, 2 und 4 - 6 gezeigte Schnellspanneinheit 10 eingesetzt. Die Verschlusseinheit befindet sich dabei vollständig im Innenraum 44 des Hohlkolbenelements 26. Zur Verlagerung des Zwischenelements 100 und des Trägerteils 82 aus der Ruhelage in die Aktivierungslage ist ein Federelement 102 vorgesehen, das sich einerseits an der Innenseite des Verschlusselements 40 und andererseits an der dem Verschlusselement 40 zugewandten Seite des Trägerteils 82 abstützt. Die Ruhelage des Trägerteils 82 ist dabei in der Figur 12 dargestellt, in der der Spannbolzen 16 in verriegeltem Zustand in der Schnellspanneinheit 10 angeordnet ist. Werden nun die Spannelemente 18 aufgrund einer Druckbeaufschlagung des Druckraums 32 in ihre Entriegelungslage verfahren und wird der Spannbolzen 16 in axialer Richtung aus der Spannaufnahme 14 entnommen, so wird aufgrund des Federelements 102 das Trägerteil 82 in die Aktivierungslage, in der es sich in der Spannaufnahme 14 befindet, entsprechend Figur 13 bewegt. In diesem Zustand befindet sich allerdings noch ein Spalt zwischen dem der Spannaufnahme 14 begrenzenden Bereich 20 des Grundkörpers 12 und dem Dichtungselement 88. Werden nun, wie in Figur 14 dargestellt, die Spannelemente 18 beispielsweise aufgrund der Federkraft der Federelemente 36 und/oder aufgrund einer Druckbeaufschlagung des Zylinderraums 38 in ihre Verriegelungslage überführt, so wird das Druckelement 84 von den Spannelementen 18 nach axial oben in die Verschlusslage bewegt. Hierzu sind an den Spannelementen 18 Führungsschrägen 104 sowie am Druckelement 84 ein mit den Führungsschrägen 104 korrespondierender konusartig umlaufender Führungsabschnitt 106 vorgesehen.

Wie aus Figur 14 deutlich wird, wird in der Verschlusslage des Druckelements 84 das Dichtungselement 88 nach radial außen gegen die die Spannaufnahme 14 begrenzende Wandung 20 des Grundkörpers 12 wenigstens weitgehend dicht beaufschlagt. Hierdurch wird unterbunden, dass Späne oder Verschmutzungen über die Spannaufnahme 14 in die Schnellspanneinheit 10 eindringen können.

Zur axialen Hubbegrenzung des Zwischenteils 100 innerhalb des Hohlkolbenelements 26 weist das Hohlkolbenelement 26 einen umlaufenden Anschlag 112 auf, der in der Aktivierungslage des Trägerteils 82 beziehungsweise des Zwischenelements 100 mit einem zwischenteilseitigen Ringbund 114, wie in Figur 14 dargestellt, zusammenwirkt. Entsprechend weist das Zwischenteil 100 an seinem axialen oberen Ende einen nach innen ragenden Anschlag 116 auf, der in der Aktivierungslage mit einem an der unteren Seite des Zwischenteils 82 angeordneten, einen Gegenanschlag 118 aufweisenden Ringbund 120 zusammenwirkt, wie in den Figuren 9, 10, 11 und 13, 14 gezeigt ist.

Um auf der Oberseite 108 des Grundkörpers 12 auftretende Verschmutzungen oder Späne zu entfernen, kann, wie zur Figur 11 erläutert, der Innenraum 110 des Trägerteils 82 beziehungsweise des Hohlkolbenelements 26 mit Druckluft beaufschlagt werden, wodurch der Ventilkörper 92 entgegen der Federkraft der Feder 90 abhebt und die Druckluft gegebenenfalls auf der Oberseite 108 vorhandene Verschmutzungen oder Späne wegbläst.

## Patentansprüche

1. Schnellspanneinheit (10, 50) mit einer von einem Grundkörper (12) gebildeten Spannaufnahme (14), mit wenigstens einem gegenüber dem Grundkörper (12) zwischen einer Entrieglungsstellung und einer Verrieglungsstellung beweglich angeordneten Spannelement (18), mit einem Zylinder und einem im Zylinder angeordneten, mit dem Zylinder wenigstens einen Druckraum (32, 52) begrenzenden Kolbenelement, wobei bei einer Druckbeaufschlagung des Druckraums (32, 52) mit einem Druckmittel das Spannelement (18) in die Verriegelungslage oder die Entriegelungslage bewegt wird, **dadurch gekennzeichnet, dass** das Kolbenelement (26) gegenüber dem Grundkörper (12) feststehend angeordnet und der Zylinder als ein gegenüber dem Grundkörper (12) und dem Kolbenelement (26) axial verschiebliches Zylinderelement (24) ausgebildet ist, welches zur radialen Bewegung des Spannelements (18) mit dem Spannelement (18) bewegungsgekoppelt ist.

2. Schnellspanneinheit (10, 50) nach Anspruch 1, **dadurch gekennzeichnet, dass** das Kolbenelement (26) als Hohlkolbenelement ausgebildet ist.

3. Schnellspanneinheit (10, 50) nach Anspruch 2, **dadurch gekennzeichnet, dass** die der Spannaufnahme (14) zugewandte Innenseite des Kolbenelements (26) sich in axialer Verlängerung der Spannaufnahme (14) erstreckt und wenigstens zur abschnittsweisen Axialführung eines in die Spannaufnahme (14) eingreifenden Spannbolzens (16) ausgebildet ist.

4. Schnellspanneinheit (10, 50) nach einem der vorhergehenden Ansprüche, **dadurch gekennzeichnet, dass** das Kolbenelement (26) einen den wenigstens einen Druckraum (32, 52) in axialer Richtung begrenzenden, umlaufenden und in nach radial außen gewandter Richtung abstehenden, ringbundartigen Kolbenabschnitt (30) aufweist.

5. Schnellspanneinheit (10, 50) nach einem der vorhergehenden Ansprüche, **dadurch gekennzeichnet, dass** wenigstens ein Federelement (36) vorgesehen ist, dass das Zylinderelement (24) so beaufschlagt, dass das Spannelement (18) in der Verriegelungsstellung gehalten und/oder in die Verriegelungsstellung gebracht wird.

6. Schnellspanneinheit (10, 50) nach einem der vorhergehenden Ansprüche, **dadurch gekennzeichnet, dass** das Zylinderelement (24) ein den Druckraum (32) auf der der Spannaufnahme (14) abgewandten Seite begrenzendes, das Kolbenelement (26) ringartig umgebendes Deckelelement (34) umfasst.

7. Schnellspanneinheit (10) nach einem der vorhergehenden Ansprüche, **dadurch gekennzeichnet, dass** der Grundkörper (12) einen das Zylinderelement (24) aufnehmenden, zur verschieblichen Lagerung des Zylinderelements (24) druckbeaufschlagbaren Zylinderraum (38) aufweist.

8. Schnellspanneinheit (10) nach Anspruch 7, **dadurch gekennzeichnet, dass** der Zylinderraum (38) und der Druckraum (32) derart ausgebildet sind, dass bei einer Druckbeaufschlagung des Zylinderraums (38) das Spannelement (18) seine Verrieglungslage und bei Druckbeaufschlagung des Druckraums (32) seine Entrieglungslage einnimmt.

9. Schnellspanneinheit (10) nach Anspruch 8 , **dadurch gekennzeichnet, dass** der Zylinderraum (38) auf seiner der Spannaufnahme (14) abgewandten Seite mit einem am Kolbenelement (26) anliegenden Verschlusselement (40) verschlossen ist.

10. Schnellspanneinheit (10, 50) nach einem der Ansprüche 2 bis 9, **dadurch gekennzeichnet, dass** das Kolbenelement (24) auf seiner Innenseite Anschläge (112) oder Befestigungsabschnitte für in dem Kolbenelement (26) anzuordnende Baugruppen oder Einheiten (80) aufweist.

11. Verschlusseinheit (80) zur Anordnung innerhalb einer Spannaufnahme (14) und zum Verschließen der Spannaufnahme (14) einer ein zwischen einer Entrieglungsstellung und einer Verrieglungsstellung beweglich angeordnetes Spannelement (18) aufweisenden Schnellspanneinheit (10, 50) nach einem der vorhergehenden Ansprüche, mit einem ringartig ausgebildeten Druckelement (84), das auf einem Trägerteil (82) zwischen einer Einführlage und einer Verschlusslage axial bewegbar ist, und mit einem elastischen Dichtungselement (88), das in der Verschlusslage des Druckelements (84) zum wenigstens weitgehend dichten Verschließen der Spannaufnahme vom Druckelement (84) gegen den die Spannaufnahme (14) umgebenden Bereich (20) des Grundkörper (12) beaufschlagt wird, wobei der Durchmesser des Druckelements (84) samt Dichtungselement (88) in der Einführlage kleiner ist als der der Spannaufnahme (14), so dass ein Einführen des Druckelements (88) samt Dichtungselement (88) in die Spannaufnahme (14) möglich ist, wobei das Druckelement (84) dazu vorgesehen ist, mit dem Spannelement (18) derart zusammenzuwirken, dass das Druckelement (84) vom Spannelement (18) in die Verschlusslage gebracht wird, wenn das Spannelement (18) in seine Verrieglungsstellung bewegt wird.

12. Verschlusseinheit (80) nach Anspruch 11, **dadurch gekennzeichnet, dass** das Dichtungselement (88) als Dichtungsbalg ausgebildet ist, der einerseits am Druckelement (84) und andererseits einem ring- oder plattenartigen ausgebildeten, nach radial außen überstehenden Rand (86) des Trägerteils (82) angeordnet ist.

13. Verschlusseinheit (88) nach einem der Ansprüche 11 oder 12, **dadurch gekennzeichnet, dass** im Trägerteil (82) ein das Trägerteil (82) durchgreifender, axial unter Federvorspannung angeordneter Ventilkörper (92) vorgesehen ist, über den bei einem innerhalb der Verschlusseinheit (80) auftretenden Überdruck Druckluft aus dem Trägerteil (82) entweichen kann.

14. Verschlusseinheit (80) nach einem der Ansprüche 11 bis 13, **dadurch gekennzeichnet, dass** ein Federelement (102) vorgesehen ist, das das Trägerteil (82) bei Entnahme eines in die Spannaufnahme (14) eingeführten Spannbolzens (16) aus einer Ruhelage in eine in die Spannaufnahme (14) eingeführte Aktivierungslage beaufschlagt und/oder das Trägerteil (82) in der Aktivierungslage hält.

15. Verschlusseinheit (80) nach einem der Ansprüche 11 bis 14, **dadurch gekennzeichnet, dass** das Trägerteil (82) von wenigstens einem zur Abstützung an der Schnellspanneinheit (10, 50) geeigneten, teleskopartig ausgebildeten Zwischenteil (100) bei einer Bewegung zwischen der Ruhelage und der Aktivierungslage geführt wird.

16. Verschlusseinheit (80) nach einem der Ansprüche 11 bis 15, **dadurch gekennzeichnet, dass** die Verschlusseinheit (80) zur Unterbringung in dem als Hohlkolbenelement ausgebildeten Kolbenelement (26) einer Schnellspanneinheit (10, 50) nach einem der Ansprüche 2 bis 10 vorgesehen ist.

17. Schnellspannsystem, umfassend eine Schnellspanneinheit (10, 50) nach einem der Ansprüche 1 bis 10, und eine im Kolbenelement (26) angeordnete Verschlusseinheit (80) nach einem der Ansprüche 11 bis 16.

## Claims

1. A quick chucking unit (10, 50) with a chuck receptacle (14) formed by a basic body (12), with at least one chucking element (18) movably situated between an unlatched position and latched position, with a cylinder and a piston element situated in the cylinder, which, along with the cylinder, borders at least one pressure region (32, 52), wherein the chucking element (18) is moved into the latched position or unlatched position while pressurizing the pressure region (32, 52) with a pressure means, **characterized in that** the piston element (26) is fixed in place relative to the basic body, and the cylinder is designed as a cylinder element (24) that can shift axially relative to the basic body (12) and piston element (26) and that is coupled with the chucking element (18) in terms of motion to radially move the chucking element (18).

2. The quick chucking unit (10, 50) according to claim 1, **characterized in that** the piston element (26) is designed as a hollow piston element.

3. The quick chucking unit (10, 50) according to claim 2, **characterized in that** the inside of the piston element (26) facing the chuck receptacle (14) extends in an axial elongation of the chuck receptacle (14), and is designed to sectionally and axially guide a pulling bolt (16) that reaches into the chuck receptacle (14).

4. The quick chucking unit (10, 50) according to one of the preceding claims, **characterized in that** the piston element (26) exhibits a continuous piston section (30) that borders the at least one pressure region (32, 52) in an axial direction, and projects in a radially outward direction.

5. The quick chucking unit (10, 50) according to one of the preceding claims, **characterized in that** at least one spring element is provided (36), acting on the cylinder element (24) in such a way as to hold the chucking element (18) in the latched position and/or move it into the latched position.

6. The quick chucking unit (10, 50) according to one of the preceding claims, **characterized in that** the cylinder element (24) has a cover element (34) that borders the pressure area (32) on the side facing away from the chuck receptacle (14) and envelops the piston element (26) like a ring.

7. The quick chucking unit (10) according to one of the preceding claims, **characterized in that** the basic body (12) exhibits a cylinder area (38) that incorporates the cylinder element (24) and can be pressurized to moveably house the cylinder element (24).

8. The quick chucking unit (10) according to claim 7, **characterized in that** the cylinder area (38) and the pressure area (32) are designed in such a way that the chucking element (18) assumes its latched position during pressurization of the cylinder area (38), and assumes its unlatched position during pressurization of the pressure area (32).

9. The quick chucking unit (10) according to claim 8, **characterized in that**, on the side facing away from the chuck receptacle (14), the cylinder area (38) is sealed with a sealing element (40) that abuts the piston element (26).

10. The quick chucking unit (10, 50) according to one of claims 2 to 9, **characterized in that** the inside of the piston element (24) has stops (112) or attachment sections for subassemblies or units (80) to be arranged in the piston element (26).

11. A sealing unit (80) to be arranged inside a chuck receptacle (14) and used to seal the chuck receptacle (14) of a quick chucking unit (10, 50), comprising a chucking element (18) movably situated between a unlatched position and a latched position, according to one of the preceding claims, with an annular pressure element (84) that can be axially moved on a carrier section (82) between an insertion position and sealing position, and with an elastic sealing element (88), which is pressed by the pressure element (84) against the area (20) of the basic body (12) enveloping the chuck receptacle (14) in order to seal the chuck receptacle to at least a largely tight extent with the pressure element (84) in the sealed position, wherein the diameter of the pressure element (84) with sealing element (88) is smaller than that of the chuck receptacle (14) in the insertion position, so that the pressure element (84) plus sealing element (88) can be introduced into the chuck receptacle (14), whereby the pressure element (84) is designed to interact with at least one chucking element (18) of the quick chucking unit (10, 50) in such a way that the chucking element (18) brings the pressure element (84) into the sealed position while the chucking element (18) is moved to its latched position.

12. The sealing unit (80) according to claim 11, **characterized in that** the sealing element (88) is designed as a sealing bellows, which is situated on the pressure element (84), and on a ring-or plate-shaped edge (86) of the carrier section (82) that projects radially outward.

13. The sealing unit (80) according to one of claims 11 or 12, **characterized in that** a sealing body (92) is arranged in the carrier section (82), axially exposed to an initial load by a spring, and extends through the carrier section (82), through which compressed air can escape from the carrier section (82) given an excess pressure inside the sealing unit (80).

14. The sealing unit (80) according to one of claims 11 to 13, **characterized in that** a spring element (102) is provided, which pushes the carrier section (82) from a resting position to an activation position in the chuck receptacle (14) and/or holds the carrier section (82) in the activation position upon removal of a pulling bolt (16) introduced in the chuck receptacle (14).

15. The sealing unit (80) according to one of claims 11 to 14, **characterized in that** the carrier section (82) is guided from the resting position to the activation position by means of at least one telescoping adapter (100), which can rest against the quick chucking unit (10, 50).

16. The sealing unit (80) according to one of claims 11 to 15, **characterized in that** the sealing unit (80) is provided for incorporation in the piston element (26) designed as a hollow piston element of a quick chucking unit (10, 50) according to at least one of claims 2 to 10.

17. A quick chucking system comprising a quick chucking unit (10, 50) according to one of claims 1 to 10, and a sealing unit (80) arranged in the piston element (26) according to one of claims 11 to 16.

## Revendications

1. Unité de serrage rapide (10, 50) comportant un logement de serrage (14) formé par un corps de base (12), comportant au moins un élément de serrage (18) agencé de façon à pouvoir se déplacer entre une position de déverrouillage et une position de verrouillage par rapport au corps de base (12), et comportant un cylindre et un élément de piston agencé dans le cylindre et délimitant avec le cylindre au moins une chambre de pression (32, 52), dans laquelle, lorsque l'on met sous pression la chambre de pression (32, 52), l'élément de serrage (18) se déplace en position de verrouillage ou en position de déverrouillage, **caractérisée en ce que** l'élément de piston (26) est agencé de manière fixe par rapport au corps de base (12) et **en ce que** le cylindre est réalisé sous la forme d'un élément de cylindre (24) mobile axialement par rapport au corps de base (12) et à l'élément de piston (26), lequel élément de cylindre, pour déplacer radialement l'élément de serrage (18), est couplé en mouvement avec l'élément de serrage (18).

2. Unité de serrage rapide (10, 50) selon la revendication 1, **caractérisée en ce que** l'élément de piston (26) est réalisé sous la forme d'un élément de piston creux.

3. Unité de serrage rapide (10, 50) selon la revendication 2, **caractérisée en ce que** le côté intérieur de l'élément de piston (26) orienté vers le logement de serrage (14) s'étend dans le prolongement axial du logement de serrage (14) et est réalisé au moins pour le guidage axial d'un boulon de serrage (16) venant s'engrener dans le logement de serrage (14).

4. Unité de serrage rapide (10, 50) selon l'une des revendications précédentes, **caractérisée en ce que** l'élément de piston (26) présente une section de piston (30) circulaire délimitant la au moins une chambre de pression (32, 52) dans le sens axial et s'écartant radialement vers l'extérieur.

5. Unité de serrage rapide (10, 50) selon l'une des revendications précédentes, **caractérisée en ce qu'**il est prévu au moins un élément de ressort (36) et **en ce que** l'élément de cylindre (24) alimente en pression de telle façon que l'élément de serrage (18) reste en position de verrouillage et/ou est amené en position de déverrouillage.

6. Unité de serrage rapide (10, 50) selon l'une des revendications précédentes, **caractérisée en ce que** l'élément de cylindre (24) comprend un élément de couvercle (34) entourant à la façon d'un anneau l'élément de piston (26) et délimitant la chambre de pression (32) sur le côté orienté à l'opposé du logement de serrage (14).

7. Unité de serrage rapide (10) selon l'une des revendications précédentes, **caractérisée en ce que** le corps de base (12) présente une chambre de cylindre (38) recevant l'élément de cylindre (24) et pouvant être mise sous pression pour modifier la position de l'élément de cylindre (24).

8. Unité de serrage rapide (10) selon la revendication 7, **caractérisée en ce que** la chambre de cylindre (38) et la chambre de pression (32) sont réalisées de telle façon que, lorsque la chambre de cylindre (38) est mise sous pression, l'élément de serrage (18) se met en position de verrouillage et lorsque c'est la chambre de pression (32) qui est mise sous pression, il se met en position de déverrouillage.

9. Unité de serrage rapide (10) selon la revendication 8, **caractérisée en ce que** la chambre de cylindre (38) est fermée au niveau de son côté orienté à l'opposé du logement de serrage (14) par un élément de fermeture (40) accolé à l'élément de piston (26).

10. Unité de serrage rapide (10, 50) selon l'une des revendications 2 à 9, **caractérisée en que** l'élément de piston (24) présente sur son côté intérieur des butées (112) ou des sections de fixation pour les ensembles ou unités (80) à disposer dans l'élément de piston (26).

11. Unité de fermeture (80) destinée à être agencée à l'intérieur d'un logement de serrage (14) et destinée à fermer le logement de serrage (14) d'une unité de serrage rapide (10, 50) présentant un élément de serrage (18) agencé de façon à pouvoir se déplacer entre une position de déverrouillage et une position de verrouillage, selon l'une des revendications précédentes, comportant un élément de pression (84) de forme annulaire pouvant se déplacer axialement sur une pièce support (82) entre une position d'ouverture et une position de fermeture, et comportant un élément d'étanchéité élastique (88), qui, en position de fermeture de l'élément de pression (84) en vue de fermer de façon la plus étanche possible le logement de serrage de l'élément de pression (84), vient en butée contre la zone périphérique (20) du corps de base (12) entourant le logement de serrage (14), le diamètre de l'élément de pression (84) et de l'élément d'étanchéité (88) en position ouverte étant inférieurs à celui du logement de serrage (14), de telle façon qu'il est possible d'introduire l'élément de pression (84) et l'élément d'étanchéité (88) dans le logement de serrage (14), l'élément de pression (84) étant prévu pour coopérer avec l'élément de serrage (18) de façon à amener l'élément de pression (84) de l'élément de serrage (18) en position de fermeture lorsque l'élément de serrage (18) se met en position de verrouillage.

12. Unité de fermeture (80) selon la revendication 11, **caractérisée en ce que** l'élément d'étanchéité (88) est réalisé sous la forme d'un soufflet d'étanchéité qui est agencé, d'un côté, contre l'élément de pression (84) et, de l'autre côté, contre un bord (86) de la pièce support (82) en saillie radialement vers l'extérieur et réalisé en forme de plaque ou d'anneau.

13. Unité de fermeture (80) selon l'une des revendications 11 ou 12, **caractérisée en ce qu'**il est prévu dans la pièce support (82) un corps de soupape (92) agencé axialement sous précontrainte et venant s'engrener dans la pièce support (82), et **en ce que** par le biais du corps de soupape, en cas de surpression à l'intérieur de l'unité de fermeture (80), l'air comprimé peut être évacué hors de la pièce support (82).

14. Unité de fermeture (80) selon l'une des revendications 11 à 13, **caractérisée en ce qu'**il est prévu un élément de ressort (102) qui alimente la pièce support (82), lorsque l'on retire un boulon de serrage (16) introduit dans le logement de serrage (14) pour le faire passer d'une position de repos à une position d'activation, et/ou supporte la pièce support (82) en position d'activation.

15. Unité de fermeture (80) selon l'une des revendications 11 à 14, **caractérisée en ce que** la pièce support (82) est guidée par au moins une pièce intermédiaire (100) réalisée télescopique et adaptée pour venir en appui sur l'unité de serrage rapide (10, 50) lors du déplacement entre la position de repos et la position d'activation.

16. Unité de fermeture (80) selon l'une des revendications 11 à 15**, caractérisée en ce que** l'unité de fermeture (80) est prévue pour être logée dans l'élément de piston (26) réalisé sous la forme d'un élément de piston creux d'une unité de serrage rapide (10, 50) selon l'une des revendications 2 à 10.

17. Système de serrage rapide comportant une unité de serrage rapide (10, 50) selon l'une des revendications 1 à 10 et une unité de fermeture (80), agencée dans l'élément de piston (26), selon l'une des revendications 11 à 16.
